# EUROPÄISCHE PATENTANMELDUNG

(11) **EP 1 798 098 A1**
(43) Veröffentlichungstag der Anmeldung: **20.06.2007**
(21) Anmeldenummer: 06025657.5
(22) Anmeldetag: 12.12.2006
(51) Int. Cl.: B60K 26/02

(54) **Fahrpedal für Fahrzeuge**

(30) Priorität: 13.12.2005 DE 102005059975
(71) Anmelder: AB Elektronik GmbH, 59368 Werne (DE)
(72) Erfinder: Klopfenstein, Laurent, 59368 Werne (DE)
(74) Vertreter: Wenzel & Kalkoff

(57) **Zusammenfassung**

Damit die Bewegung eines Pedalelements (2) einer Fahrpedalvarrichtung gezielt und einfach beeinflusst werden kann, weist eine Dämpfungseinheit eine Zangeneinheit (1) auf, die zwei Zangenschenkel (11, 12) besitzt, die jeweils in eine Zangenklaue (14, 15) übergehen, wobei der eine Zangenschenkel (11) am Pedalelement (2), der andere Zangenschenkel (12) an einer Pedalrückholeinheit (5.1, 5.2) und beide Zangenklauen (14, 15) an einem Wellenelement (6) anliegen.

## Beschreibung

Die ErFrndung betrifft eine Fahrpedalvorrichtung für Fahrzeuge, insbesondere Personenkraftwagen, die wenigstens aufweist eine Basiseinheit, ein Pedalelement, das in einem Pedaldrehpunkt mit der Basiseinheit verbunden ist, eine Pedalrückholeinheit und eine Dämpfungseinheit, die zwischen Pedalelement und Basiseinheit angeordnet sind.

Eine Fahrpedalvorrichtung der eingangs genannten Art ist aus der DE-A-100 33 295 bekannt, welche ein Pedalelement aufweist, das in einem Pedaldrehpunkt mit einer Basiseinheit verbunden ist. Zwischen Basiseinheit und Pedalelement ist wenigstens ein Federelement angeordnet. Der Fahrpedaldrehpunkt ist als Achsenelement ausgebildet, auf dem ein Pedalringelement auf einem zwischen ihnen angeordneten Gleitflächenelement zu verdrehen ist, um durch Reibung eine gezielte Dämpfung der Bewegung des Pedalelements zu erreichen.

Auch in der DE-A-195 14 541 wird bei einem Fahrpedal die Kraft der Rückstellfeder gleichzeitig auch in der Dämpfungseinheit zur Erzeugung des Reibmoments für den Aufbau einer Kraft-Weg-Hysterese genutzt. In verschiedenen Ausführungsformen sind jeweils eine Basiseinheit und ein schwenkbar mit dieser verbundenes Pedalelement gezeigt, bei denen eine Feder die Pedalrückholcinheit bildet. Einige der Ausführungen sehen vor, dass Drähte, Seile oder Federn eine Reibung mit einem Wellenelement herstellen (Fig. 1, Fig. 2, Fig. 5-7). Andere sehen einen Hebel vor, der schwenkbar gelagert ist und eine Reibpaarung mit dem Wellenelement bildet (Fig. 3, Fig. 4). In einer weiteren Ausführung (Fig. 10) ist ein entsprechender elastischer Klemmechanismus gezeigt.

Auch in der DE-A-102 18 627 ist eine Fahrpedaleinheit gezeigt, bei der ein Pedalelement an einer Basiseinheit um eine ortsfeste Achse schwenkt. Die Achse ist hierbei von einer Öse umgeben. Um eine Reibung zu erzeugen, ist an der Öse ein in einem Gelenk gelagerter Hebel vorgesehen, an dem eine Rückholfeder angreift. Bei der Rückholfeder handelt es sich um eine Zugfeder, durch deren Belastung ein Teil des Hebels gegen die ortsfeste Achse gedrückt wird, so daß eine gewünschte Reibung entsteht. Die Öse und der Hebel können aus einem thermoplastischen Kunststoff einstückig gefertigt sein, wobei das Gelenk durch eine durch Materialwegnahme gebildete Einschnürung gebildet ist, die als Drehpunkt wirkt.

Es stellt sich deshalb die Aufgabe, eine Fahrpedalvorrichtung der ei ngangs genannten Art so weiter zu entwickeln, daß auf konstruktiv einfache Weise eine Dämpfung der Bewegung des Pedalelements erreicht werden kann.

Erfindungsgemäß wird diese Aufgabe dadurch gelöst,
- daß die Dämpfungseinheit eine Zangeneinheit aufweist, die zwei Zangenschenkel besitzt, die jeweils in eine Zangenklaue übergehen,
- daß der eine Zangenschenkel mit dem Pedalelement und der andere Zangenschenkel mit der Pedalrückholeinheit gekoppelt ist,
- und beide Zangenklauen an einem Wellenelement anliegen, wobei zwischen den Zangenschenkeln ein zangenbewegungsabschnitt angeordnet ist, der eine Zangenbewegung ermöglicht.

Die mit der Erfindung erzielten Vorteile bestehen insbesondere darin, daß bei Betätigung des Pedalelements die Zangenschenkel zusammen gedrückt werden und die beiden Zangenklauen das Wellenelement wie eine Rohrzange umfassen. Die der Pedalbetätigung entgegengesetzte Kraft setzt sich zusammen aus der Kraft der Pedalrückholeinheit einerseits und der Dämpfung, nämlich der Reibungskraft der Zangenklauen am Wellenelement, andererseits. Die Pedalrückholeinheit bewirkt bei Betätigung die Spannkraft der Zange und gibt damit den Betrag der Reibungskraft vor. Der Betätigung wirkt eine über den Betätigungsweg ansteigende Gegenkraft entgegen.

Im Gegensatz zu bekannten Lösungen wird nicht lediglich ein einzelner beweglicher Hebel verwendet, sondern eine beidseitig klemmende Zangeneinheit. So können besonders hohe Klemmkräfte erzielt werden. Der Zangenbewegungsabschnitt wirkt wie ein Gelenk und ermöglicht die Zangenbewegung. Er ist gebildet zwischen den Zangenschenkeln, d.h. an dem Betätigungsteil des Zangenelements und nicht lediglich an den Zangenklauen, d.h. dem Teil der Zangeneinheit, der unmittelbar mit dem Wellenelement zusammenwirkt.

In den Unteransprüchen sind vorteilhafte Weiterbildungen der Merkmale des Anspruchs 1 angegeben.

In einer Weiterbildung der Erfindung ist ein Zangenschenkel mit dem Pedalelement durch einseitige, gleitende Anlage gekoppelt. Diese Form der Kopplung ist für ein Bewegungsverhalten vorteilhaft, bei dem die gewünschte Gegenkraftwirkung ausschließlich in Richtung entgegen der Betätigungsrichtung wirkt. Durch einseitige, gleitende Anlage kann dann die Dämpfungseinheit sehr flexibel mit dem Pedalelement gekoppelt werden.

Während es möglich ist, daß als Zangenbewegungsabschnitt ein Gelenk dient, ist es bevorzugt, daß die Beweglichkeit der Zangenschenkel bzw. -klauen der Zangeneinheit durch einen wenigstens teilweise elastischen Zangenbewegungsabschnitt gewährleistet wird. Der Zangenbewegungsabschnitt kann ein elastischer Materialabschnitt, bspw. eine elastische Einlage, eine Materialschwächung oder dgl. sein, die Zangenschenkel und Zangenklaue verbinden. Hierdurch wird eine an sich bekannte Zangenfunktion der Zangeneinheit erreicht. Bevorzugt ist die gesamte Zangeneinheit, d. h. beide Zangenschenkel und -klauen, einstückig gefertigt, bevorzugt aus Kunststoff. So kann die Einheit besonders kostengünstig hergestellt werden.

Die Zangenschenkel können aus wenigstens einer Schenkelrippe und die Zangenklauen aus wenigstens einer Klauenrippe bestehen. Bevorzugt sind Zangenschenkel und/oder - klauen aus mehreren bevorzugt parallelen Rippen aufgebaut. Hierdurch ist eine platzsparende Bewegung beider Schenkel bei ihrer Kneifbewegung möglich, und die Klauenkraft läßt sich geeignet beeinflussen.

Die Schenkelrippen des einen Zangenschenkels können zwischen den Schenkelrippen des anderen Zangenschenkels angeordnet sein. Diese Gestaltung trägt zur platzsparenden Bewegung beider Schenkel bei ihrer Kneifbewegung bei. Insbesondere bei Kunststoffmaterial können so aufgrund der günstigen Kraftverteilung sehr hohe Klemmkräfte erreicht werden, ohne das Material zu stark zu beanspruchen.

Die Klauenrippen beider Zangenklauen können auf den dem Wellenelement zugewandten Flächenelementen wenigstens teilweise eine reibungserhöhende Beschichtung mit einem gewünschten Reibungskoeffizienten aufweisen. Besonders kostensparend ist es aber, daß die Zangenklauen kein solches zusätzliches Material enthalten. Somit bildet das Kunststoffmaterial, aus dem die Zangenklauen (und bevorzugt einstückig hiermit auch die Zangenschenkel) bestehen, bevorzugt direkt einen Teil der Reibpaarung der Zangenklauen mit dem Wellenelement. Dies ist besonders vorteilhaft verwendbar im Zusammenhang mit der oben beschriebenen Rippenstruktur. Denn bei der Materialauswahl können gegensätzliche Anforderungen auftreten, wenn Kunststoffe, die die für die Erzeugung hoher Klemmkräfte notwendige Festigkeit aufweisen (z.B. faserverstärkte Kunststoffe) schlechte Reibeigenschaften aufweisen und umgekehrt Kunststoffe mit guten Reibeigenschaften nicht die erforderliche Festigkeit bieten können.

Einerseits wäre es möglich, für die kraftbelasteten Teile der Dämpfungseinheit hochfeste, fasergefüllte (bspw. Glasfaser) Kunststoffmaterialien zu verwenden, bspw. mit einem Faseranteil von 20-30% oder sogar mehr. Diese Materialien haben aber keine guten Reibeigenschaften, so dass es ratsam ist, einen zweiten Werkstoff (Reib-Beschichtung) im Bereich der die Reibpaarung bildenden Elemente aufzubringen. Die rippenförmige Struktur stabilisiert das Element in einer Weise, daß auch mit weniger festen Kunststoffen insgesamt hohe Klemmkräfte erzielt werden können. Deshalb wird bevorzugt, dass ein Kunststoff-Material mit einem geringen Faseranteil von weniger als 15% verwendet wird. Weiter bevorzugt ist ein noch geringerer Faseranteil von 5% oder weniger. Besonders bevorzugt ist das Kunststoffmaterial faserfrei, Als bevorzugter Werkstoff wird Polyoxymethylen/Polyacetal (POM) vorgeschlagen, das sich durch gute Reibeigenschaften auszeichnet.

Die Schenkelrippen des einen Zangenschenkels können in einem Ablaufballen enden, der unter dem Pedalelement anliegt. Damit wird dem Zangenschenkel die Möglichkeit gegeben, unter dem Zangenschenkel entlang zu gleiten.

Die Schenkelrippen des anderen Zangenschenkels können in wenigstens einer Aufnahmeausnehmung enden. Die Rückholeinheit kann mit einem Ende in der Aufnahmeausnehmung und mit dem anderen Ende in der Basiseinheit gehalten werden. Beide Maßnahmen tragen zur gezielten Führung der Rückholeinheit bei.

Die Rückholeinheit kann unterschiedlich ausgebildet werden. Sie kann als wenigstens ein elastischer Block aus Gummi oder Kunststoff oder als Federelement ausgebildet sein. Aus sicherheitstechnischen Gründen können zwei Federelemente vorgesehen werden, die als Schraubendruckfedern ausgebildet sein können, die in zwei Federaufnahmeausnehmungen als Aufnahmeausnehmung gehalten werden können. Die Schraubendruckfedern erzeugen beim Zusammendrücken bevorzugt eine exponentiell ansteigende Federkraft, die die Schenkelkraft erhöhend auf die Klauen und damit auf die Welle überträgt.

Das Wellenelement kann unterschiedlich in der Basiseinheit positioniert werden. Zum einen kann es im Pedaldrehpunkt (bspw. einem Gelenk oder Filmscharnier) und zum anderen bspw. parallel im Abstand hierzu angeordnet werden. Das Wellenelement kann wenigstens einen Abflachungsbereich aufweisen und mit diesen in der Basiseinheit festgelegt werden. Das Wellenelement kann eine Ausnehmung aufweisen. Beide Maßnahmen tragen zur einer leichten Montage und sicheren Verankerung im Basisteil bei. Altemativ ist es auch möglich, daß das Wellenelement einstückig auf der Basiseinheit ausgebildet ist, bspw. als durchgängiges Element im Kunststoff-Spritzguß erstellt.

Die Pedalkraft kann unterschiedlich auf die Zangenklauen und damit auf das Wellenelement übertragen werden. So können beide Zangenschenkel gleich lang sein. Es kann aber der Zangenschenkel, der von den Federelementen abgestützt wird, länger sein als der Zangenschenkel, der an der Unterseite des Pedalelements anliegt, so dass eine Pedalkraftverstärkung erreicht wird. Die hier genannte Länge der Zangenschenkel bemißt sich vom Zangenbewegungsabschnitt zu dem jeweiligen Punkt der effektiven Kraftübertragung zum Pedalelement einerseits und Rückholeinheit andererseits.

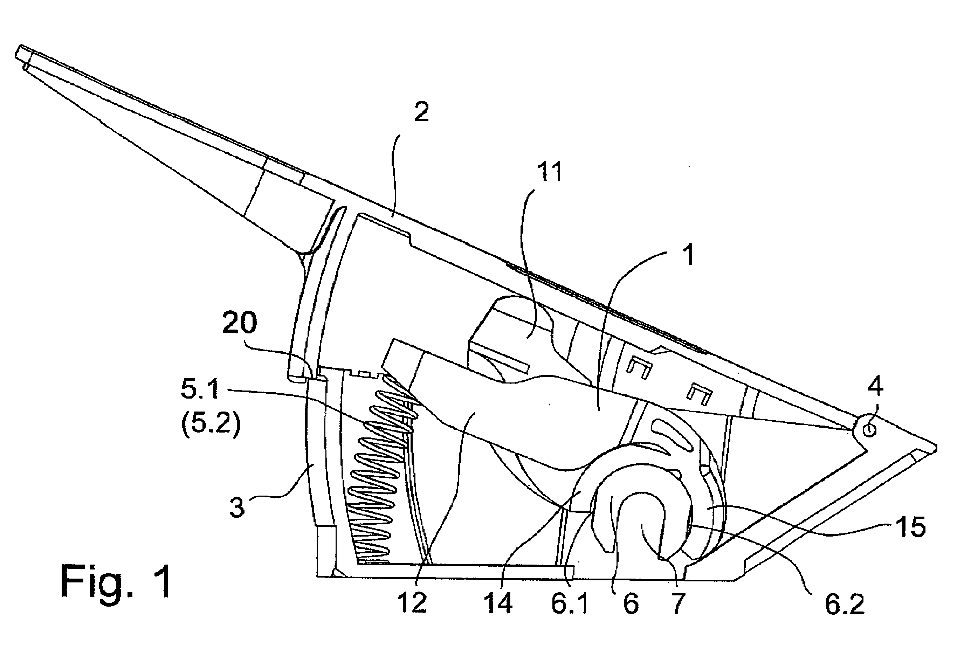

Die Erfindung wird nachstehend anhand eines in der Zeichnung dargestellten Ausführungsbeispiels näher erläutert. Es zeigen
- Fig.1: ein Fahrpedalmodul mit einer Zangeneinheit in einer schematisch dargestellten Seitenansicht

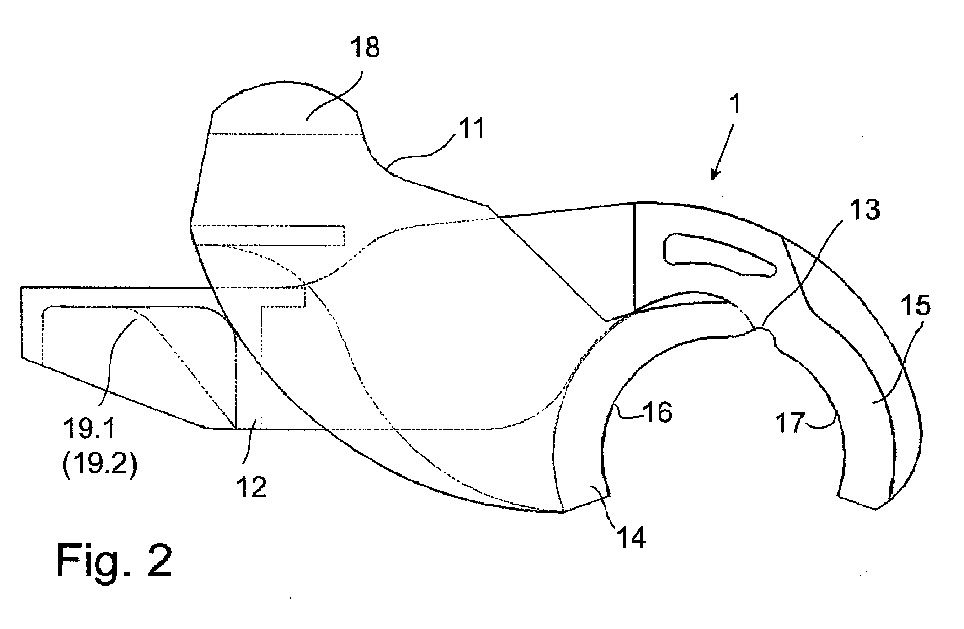

- Fig.2: eine Zangeneinheit eines Fahrpedalmoduls in einer schematischen Darstellung,

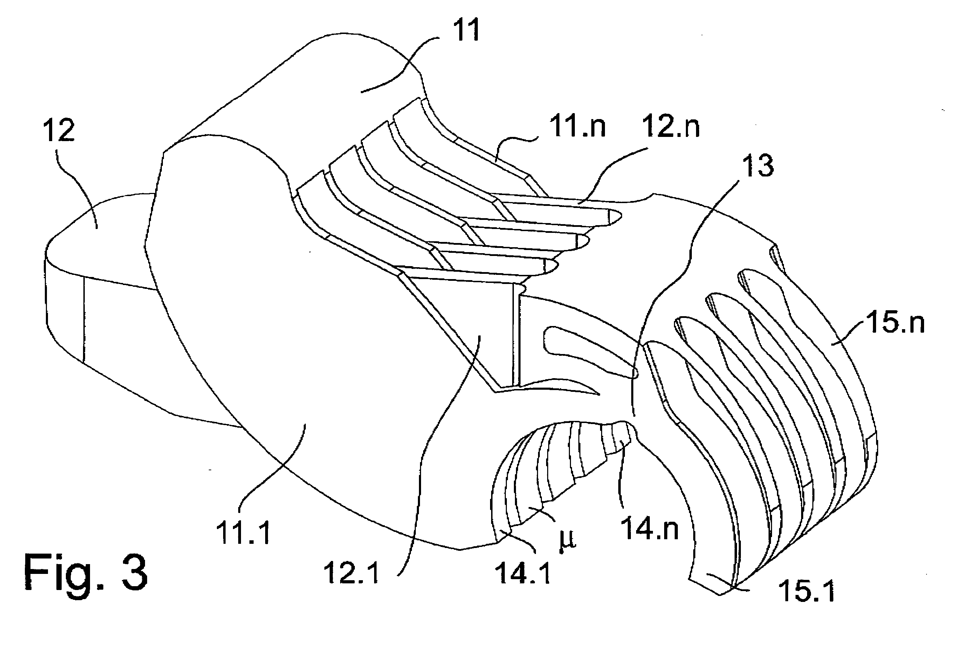

- Fig.3: eine Zangeneinheit gemäß Fig. 1 und 2 in einer schematischen, perspektivischen Darstellung und

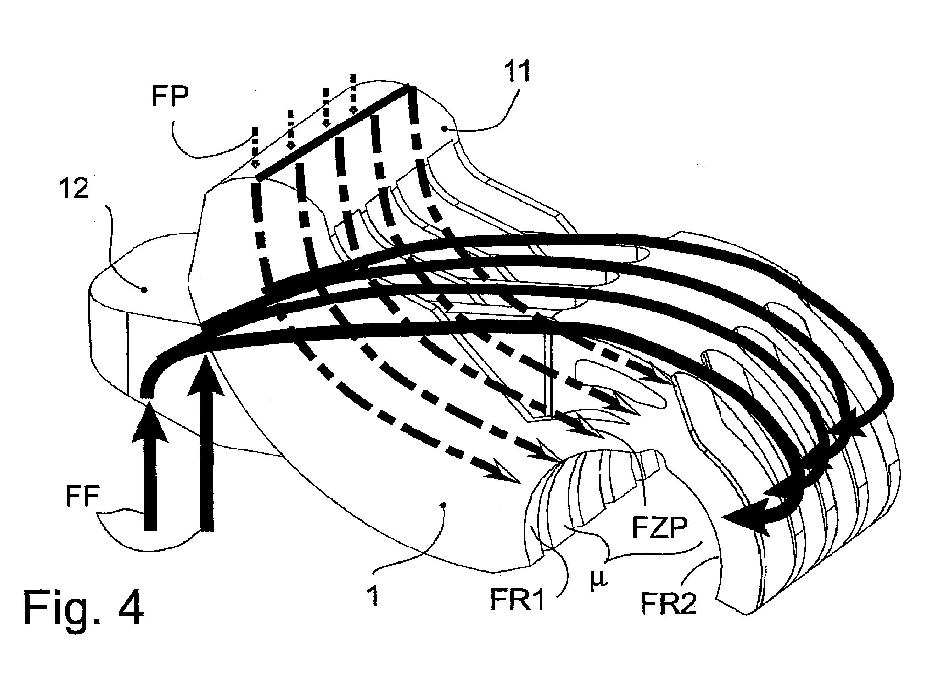

- Fig. 4: eine Zangeneinheit gemäß Fig. 3 mit Krafteinwirkungs- und -verteilungslinien in einer schematischen, perspektivischen Darstellung.

In Fig. 1 ist ein Fahrpedalmodul gezeigt. Es besteht aus wenigstens folgenden Hauptkomponenten:
- einer Basiseinheit 3,
- einem Pedalelement 2,
   das in einem Pedaldrehpunkt durch ein Pedalverbindungselement 4 mit der Basiseinheit 3 verbunden ist,
   einer 7angeneinheit 1,
- einem Wellenelement 6, das in der Basiseinheit 3 verankert ist.

Die Zangeneinheit 1 ist vergrößert in den Fig. 2 und 3 dargestellt. Sie weist einen ersten Zangenschenkel 11 und einen zweiten Zangenschenkel 12 auf, die jeweils in eine Zangenklaue 14, 15 übergehen. Jeder Zangenschenkel besteht aus einer Vielzahl Schenkelrippen 11.1, ..., 11.n, 12.1, ..., 12.n. Konkret nehmen die fünf ersten Schenkelrippen 11.1, ... die vier zweiten Schenkelrippen 12.1, ... wenigstens teilweise auf, so daß eine kammartig ineinandergreifende Struktur der Rippen 11.1, ... des ersten Zangenschenkels 11 und der Rippen 12.1, ... des zweiten Zangenschenkels 12 gebildet wird.

Die ersten Schenkelrippen 11.1, ... enden auf der einen Seite in einem Ablaufballen 18, der unter dem Pedalelement 2 anliegt (vgl. Fig. 3 und 1), und auf der anderen Seite in einem Zangenbewegungsabschnitt 13. Die zweiten Schenkelrippen 12.1, ...enden auf der einen Seite in Federaufnahmeausnehmungen 19.1, 19.2 und auf der anderen Seite ebenfalls im Zangenbewegtmgsabschnitt 13. Zwischen den Federaufnahmeausnehmungen 19.1, 19.2 und der Basiseinheit 3 sind zwei Federelemente 5.1 und 5.2 angeordnet, die als Schraubendruckfedern ausgebildet sind. Die beiden Federelemente 5.1 und 5.2 spannen das Pedalelement 2 so vor, daß es ohne Betätigung immer in der Null-, d. h. der Leerlaufstellung einer Brennkraftmaschine gehalten wird.

Mit den fünf ersten Schenkel rippen 11.1, ... sind fünf erste Klauenrippen 14.1, ..., 14.n und mit den vier zweiten Schenkelrippen 12.1, ... vier zweite Klauenrippen 15.1, ... verbunden. An den dem Wellenelement zugewandten Flächen können sie wenigstens teilweise mit einer reibungserhöhenden Beschichtung 16, 17 mit einem Reibungskoeffizienten µ versehen werden. Welcher Reibungskoeffizient µ gewählt wird, hängt von den jeweiligen Einsatz- bzw. Kundenforderungen ab.

Das Wellenelement 6 weist im Querschnitt zwei sich gegenüberliegende Abflachungsbereiche 6.1, 6.2 und dazwischen eine im wesentlichen U-förmige Ausnehmung 7 auf. Hierdurch läßt sich das Wellenelement 6 leicht in das Basiselement einsetzen und in ihm fixieren. Das Basisteil 3 und das Wellenelement 6 können auch einteilig geformt werden.

Die Zangeneinheit und ihre Teile können, ebenso wie das Wellenelement 6, aus Kunststoff oder dgl. gefertigt werden. In der gezeigten, bevorzugten Ausführungsform ist die gesamte Zangeneinheit einstückig aus einem POM-Kunststoffmaterial gebildet. Dieses Material weist einerseits gute Reibungseigenschaften auf. Andererseits hat es in der gezeigten Rippenstruktur ausreichende Festigkeit, um hohen Klemmkräften standhalten zu können.

Die Funktion der Dämpfungseinheit 1, 6 im Fahrpedalmodul, wie sie anhand der Fig.1 bis 3 beschrieben wurde, wird unter Hinzuziehung der Fig. 4 erläutert:
Die Zangeneinheit ist durch eine Kraft FF der Federn 5.1, 5.2 vorgespannt. Das Pedalelement 2 befindet sich zunächst in der Leerlaufstellung, wo es durch einen Anschlag 20 gehalten wird.

Nach dem Start der Brennkraftmaschine wird mit Hilfe des Fußes des Pedalelement 2 mit einer Pedalkraft FP beaufschlagt. Diese Pedalkraft FP wird vom Ablaufballen 18 über die Schenkelrippen 11.1, ... auf die Klauenrippen 14.1, ... und den Zangenbewegungsabschnitt 13 übertragen. Gleichzeitig versucht sich die Zangeneinheit in ihrer Gesamtheit um das Wellenelement 6 zu verdrehen. Dieser Bewegung wirkt die Federkraft FF beider Federelemente 5.1, 5.2 entgegen. Die Federkraft FF wiederum wird von den Federaufnahmeausnehmungen 19.1, 19.2 über die zweiten Schenkelrippen 12.1,... auf die zweiten Klauenrippen 15.1, ... und den Zangenbewegungsabschnitt 13 übertragen.

Beide Kräfte FP und FF bewirken eine Verformung im Zangenbewegungsabschnitt 13 und damit ein verstärktes Anpressen der Klauenrippen an das Wellenelement 6. Diese Kneifbewegung führt zu einer erhöhten Reibung, die die Drehbewegung der Zangeneinheit 1 um das Wellenelement 6 dämpft. Der Betrag der sich einstellenden Reibungskraft hängt maßgeblich ab von der Beschaffenheit der Oberflächen 16 und 17.

Damit wirkt der Pedalbewegung FP nicht nur die Federkraft FF sondern eine Zangenfederkraft FZF und eine Zangenpedalkraft FZP sowie bei Bedarf Reibungskräfte FR₁, FR₂ beider Oberflächen 16 und 17 entgegen. Veränderbar sind nicht nur die Reibungskräfte FR₁, FR₂ durch die Wahl des Reibungskoeffizienten µ, sondern auch die Zangenfederkraft FZF durch die Länge des Zangenschenkels 12 und die Federkraft FF durch die Wahl der Federelemente 5.1, 5.2. Wie Fig.i bis 4 zu entnehmen ist, ist der Zangenschenkel 12 länger als der Zangenschenkel 11 gewählt, so daß die Federkraft FF durch die Hebelwirkung verstärkt wird. Mit der erfinderischen Zangeneinheit 1 ist es also möglich, ganz gezielt die Pedalbewegung des Fahrpedalmoduls zu beeinflussen.

## Patentansprüche

1. Fahrpedalvorrichtung für Fahrzeuge mit
- einer Basiseinheit (3),
- einem Pedalelement (2), das zur Betätigung mit der Basiseinheit (3) schwenkbar verbunden ist,
- einer Pedalrückholeinheit (5.1, 5.2) und einer Dämpfungseinheit (1, 6), die zwischen Pedalelement (2) und Basiseinheit (3) angeordnet sind,
**dadurch gekennzeichnet,**
- **dass** die Dämpfungseinheit eine Zangeneinheit (1) aufweist, die zwei Zangenschenkel (11, 12) besitzt, die jeweils in eine Zangenklaue (14, 15) übergehen,
- **dass** der eine Zangenschenkel (11) so mit dem Pedalelement (2) gekoppelt ist, dass er sich bei Betätigung mit diesem bewegt,
- **dass** der andere Zangenschenkel (12) mit der Pedalrückholeinheit (5.1, 5.2) verbunden ist,
- **dass** beide Zangenklauen (14, 15) an einem Wellenelement (6) anliegen
- und **dass** zwischen den Zangenschenkeln (11, 12) ein Zangenbewegungsabschnitt (13) angeordnet ist, der eine Zangenbewegung der Zangenschenkel (11, 12) ermöglicht.

2. Vorrichtung nach Anspruch 1, **dadurch gekennzeichnet, dass**
- der eine Zangenschenkel (11) mit dem Pedalelement (2) durch einseitige, gleitende Anlage gekoppelt ist.

3. Vorrichtung nach einem der vorangehenden Ansprüche, bei der
- der Zangenbewegungsabschnitt (13) wenigstens teilweise elastisch ausgebildet ist, so dass die Elastizität die Zangenbewegung ermöglicht.

4. Vorrichtung nach Anspruch 3, **dadurch gekennzeichnet, dass**
- die Zangeneinheit, einstückig gefertigt ist.

5. Vorrichtung nach einem der vorangehenden Ansprüche, **dadurch gekennzeichnet, dass**
- mindestens einer der Zangenschenkel (11, 12) aus mindestens zwei Schenkelrippen (11.1, ..., 11.n, 12.1, ..., 12.n) besteht.

6. Vorrichtung nach Anspruch 5, **dadurch gekennzeichnet, dass**
- die Zangenschenkel (11, 12) und die Zangenklauen (14, 15) einstückig aus nur einem Kunststoffmaterial gebildet sind,
- so dass das Kunststoffmaterial einen Teil der Reibpaarung der Zangenklauen (14, 15) mit dem Wellenelement (6) bildet.

7. Vorrichtung nach Anspruch 6, **dadurch gekennzeichnet, dass**
- das Kunststoffmaterial einen Faseranteil von weniger als 15% aufweist.

8. Vorrichtung nach einem der vorangehenden Ansprüche 1 bis 5, **dadurch gekennzeichnet, dass**
- die Klauenrippen (14.1, ..., 14.n, 15.1, ..., 15.n) beider Zangenklauen (14, 15) auf den dem Wellenelement (6) zugewandten Flächenelementen wenigstens teilweise eine reibungserhöhende Beschichtung (16, 17) mit einem Reibungskoeffizienten (µ) aufweisen

9. Vorrichtung nach einem der Ansprüche 5 bis 8, **dadurch gekennzeichnet, dass**
- mindestens eine Schenkelrippe (11.1, ..., 11.n) des einen Zangenschenkels (11) zwischen Schenkelrippen (12.1, ..., 12.n) des anderen Zangenschenkels (12) angeordnet ist.

10. Vorrichtung nach einem der vorangehenden Ansprüche, **dadurch gekennzeichnet, dass**
- mindestens eine der Zangenklauen (14, 15) aus mindestens zwei Klauenrippen (14.1, ..., 14.n, 15.1, ..., 15.n) besteht.

11. Vorrichtung nach einem der vorangehenden Ansprüche, **dadurch gekennzeichnet, dass**
- die Schenkelrippen (11.1, ..., 11.n) des einen Zangenschenkels (11) in einem Ablaufballen (18) enden, der unter dem Pedalelement (2) anliegt.

12. Vorrichtung nach einem der vorangehenden Ansprüche, **dadurch gekennzeichnet, dass**
- die Schenkelrippen (12.1, ..., 12.n) des anderen Zangenschenkels (12) in wenigstens einer Aufnahmeausnehmung (19.1, 19.2) enden.

13. Vorrichtung nach Anspruch 12, **dadurch gekennzeichnet, dass**
- die Rückholeinheit (5.1, 5.2) mit einem Ende in der Aufnahmeausnehmung (19.1, 19.2) und mit dem anderen Ende gegenüber der Basiseinheit (3) gehalten ist.

14. Vorrichtung nach einem der vorangehenden Ansprüche, **dadurch gekennzeichnet, dass**
- die Rückholeinheit als Federelement (5.1, 5.2) ausgebildet ist.

15. Vorrichtung nach Anspruch 14, **dadurch gekennzeichnet, dass**
- zwei Federelemente (5.1, 5.2) vorgesehen sind, die als Schraubendruckfedern ausgebildet sind, die in zwei Federaufnahmeausnehmungen (19.1, 19.2) als Aufnahmeausnehmung gehalten sind.

16. Vorrichtung nach einem der vorangehenden Ansprüche, **dadurch gekennzeichnet, dass**
- das Pedalelement (2) in einem Pedaldrehpunkt (4) mit der Basiseinheit (3) schwenkbar verbunden ist,
- wobei das Wellenelement (6) parallel im Abstand zum Pedaldrehpunkt (4) in der Basiseinheit (3) angeordnet ist.

17. Vorrichtung nach einem der vorangehenden Ansprüche, **dadurch gekennzeichnet, dass**
- der Zangenschenkel (12), der mit der Pedalrückholeinheit (5.1, 5.2) verbunden ist, länger ist als der Zangenschenkel (11), der mit dem Pedalelement (2) gekoppelt ist.
